# DEMANDE DE BREVET EUROPEEN

(11) **EP 2 592 048 A1**
(43) Date de publication de la demande: **15.05.2013**
(21) Numéro de dépôt: 11188719.6
(22) Date de dépôt: 10.11.2011
(51) Int. Cl.: C01B 21/082, C01B 31/02, C01B 31/10, H01G 9/00

(54) **Procédé de dopage à l'azote d'un matériau charbonneux et charbon actif dopé à l'azote pour électrodes de supercondensateur**

(71) Demandeur: Yunasko Limited, London W1B 3HH (GB)
(72) Inventeur: Strelko, Volodymir, 03179 KIEV (UA); Trykhlib, Volodymir, 03164 KIEV (UA); Maletin, Yuriy, 03115 KIEV (UA); Stryzhakova, Natalia, 04108 KIEV (UA); Tychyna, Sergii, 10005 ZHITOMIR (UA); Gozhenko, Oleg, 04123 KIEV (UA)
(74) Mandataire: Delamare, Raoul

(57) **Abrégé**

L'invention concerne un procédé de dopage (1) à l'azote d'un matériau charbonneux destiné à un condensateur à double couche électrique, le procédé de dopage (1) comprenant :
- une phase de préparation (10) d'une composition (3) d'un premier matériau (31) comprenant du charbon et d'un deuxième matériau (32) comprenant de l'azote, et
- une phase de traitement thermique (11) de la composition (3) dans une atmosphère d'un gaz inerte (4) pour obtenir le matériau charbonneux dopé à l'azote.

Selon l'invention la composition (3) se présente comme un mélange sec (33) du premier et du deuxième matériaux (31), (32).

L'invention concerne également un charbon actif dopé à l'azote à l'aide du procédé de dopage (1) selon l'invention.

## Description

La présente invention concerne, de manière générale, le domaine d'électrotechnique et, en particulier, les condensateurs à double couche électrique habituellement appelés supercondensateurs ou ultracondensateurs, dont la capacité électrique spécifique peut atteindre 10⁷ Farad/m³ (ici et ci-après le terme « capacité électrique spécifique » signifie « capacité électrique dans un volume unitaire » ou « capacité électrique volumique »). Grâce à cette capacité électrique si élevée, et à une énergie spécifique qui lui est proportionnelle, les supercondensateurs sont essentiellement utilisés comme des sources d'énergie impulsionnelles qui sont soit indépendantes (lorsqu'une impulsion unitaire d'énergie suffit), soit en combinaison avec des accumulateurs traditionnels pour aplanir des pointes de charge sur la batterie d'accumulateurs.

Plus précisément, cette invention concerne les électrodes pour un condensateur à double couche électrique qui sont fabriquées à partir d'un charbon actif dopé - pour optimiser ses propriétés électrochimiques et électriques - à l'azote. La présente invention concerne également un procédé proprement dit d'implantation sélective des atomes d'azote dans la structure d'un matériau charbonneux, c'est-à-dire, le procédé de traitement du matériau charbonneux dans le but de le doper à l'azote.

Selon un premier de ses aspects, l'invention concerne un procédé de dopage à l'azote d'un matériau charbonneux destiné aux électrodes pour un condensateur à double couche électrique. Ce procédé de dopage comprend au moins :
- une phase de préparation d'une composition d'un premier matériau comprenant du charbon et d'un deuxième matériau comprenant de l'azote, et
- une phase de traitement thermique de la composition dans une atmosphère d'un gaz inerte pour obtenir le matériau charbonneux dopé à l'azote.

Un tel procédé de dopage à l'azote d'un matériau charbonneux est connu de l'article [1]. D'après cet état de la technique, un dioxyde mésoporeux de silicium SiO₂ (utilisé comme une matrice de structure et comprenant aluminium) est imbibé préalablement par un alcool furfurique C₅H₆O₂ (en anglais «furfuryl alcohol»). Un échantillon ainsi obtenu est chauffé jusqu'à 400°C pour qu'il se carbonise partiellement. Ensuite, cet échantillon partiellement carbonisé est refroidi jusqu'à une température ambiante (environ 20°C) et, après cela, est imbibé de nouveau par l'alcool furfurique. Le premier matériau comprenant du charbon est prêt. En tant que deuxième matériau comprenant de l'azote est utilisée la mélamine C₃H₆N₆. Ensuite arrive, à proprement parler, la phase de préparation de la composition au cours de laquelle le premier matériau est mélangé mécaniquement, dans des proportions définies, avec le deuxième matériau. La présence d'une phase liquide dans la composition (de l'alcool furfurique) contribue, grâce à un effet capillaire, à une pénétration de la mélamine dans le corps (c'est-à-dire, dans la masse) du premier matériau. Ainsi, le deuxième matériau comprenant de l'azote s'étale dans tout le volume du premier matériau comprenant du charbon. Une fois la phase de préparation de la composition terminée, il arrive la phase de traitement thermique de la composition qui s'opère en deux temps. D'abord, la composition est carbonisée. Pour cela elle est chauffée jusqu'à 900°C dans une atmosphère d'un gaz inerte. Ensuite, le matériau carbon-silicium ainsi obtenu est lavé dans une solution d'un acide fluorhydrique pour éliminer le dioxyde de silicium. Au final on obtient le charbon avec des pores qui présente des paramètres suivants :
- la courbe de distribution des pores selon la largeur dispose d'un maximum se trouvant dans un intervalle de 3*10⁻⁹ m à 4*10⁻⁹ m,
- le volume des pores fait de 0,6*10⁻³ m³/kg à 10⁻³ m³/kg,
- l'aire totale spécifique de la surface des pores fait de 7*10⁵ m²/kg à 10⁶ m²/kg,
- la teneur en azote dans un volume unitaire du charbon mésoporeux obtenu par le procédé connu fait en pourcents en poids de 0 à 13 %.

D'après la définition de l'Union Internationale de la Chimie Pure et Appliquée (en anglais International Union of Pure and Applied Chemistry ou IUPAC):
- les pores ayant une largeur de 2*10⁻⁹ m à 50*10⁻⁹ m s'appellent
   « mésopores »,
- les pores ayant une largeur inférieure à 2*10⁻⁹ m s'appellent
   « micropores ».

C'est pourquoi le charbon décrit ci-dessus s'appelle « charbon mésoporeux ».

L'inconvénient du procédé connu de dopage à l'azote du matériau charbonneux est la présence dans les pores des encrassements (des agglomérés) en produits solides. Ces derniers se forment à l'intérieur des pores lors de la décomposition et/ou de la cuisson des résidus de l'alcool furfurique et de la mélamine au moins pendant la phase de traitement thermique de la composition. Ces encrassements (agglomérés) adhérent aux parois internes des pores et ne se retirent pas même après le lavage évoqué ci-dessus du matériau carbon-silicium dans l'acide fluorhydrique. Lors de l'utilisation d'un tel charbon mésoporeux encrassé dans les électrodes d'un condensateur à double couche électrique, la présence des pores bouchés empêche la pénétration des ions d'électrolyte à l'intérieur des pores. Il en résulte une augmentation de la résistance interne du supercondensateur. En outre, on peut observer une brusque diminution de la capacité du supercondensateur lors de l'augmentation du courant de charge. Cela conduit à la diminution de l'énergie volumique et de la puissance du condensateur à double couche électrique ce qui est insatisfaisant.

La présente invention qui s'appuie sur cette observation originale, a principalement pour but de proposer un procédé de dopage à l'azote d'un matériau charbonneux permettant au moins de réduire l'une au moins des limitations précédemment évoquées. Pour atteindre ce but, le procédé de dopage conforme à la définition générique qu'en donne le préambule ci-dessus, est essentiellement caractérisé en ce que la composition se présente comme un mélange sec du premier et du deuxième matériaux.

Grâce au procédé de dopage selon l'invention, la composition se présente comme un granulat de deux corps distincts l'un de l'autre, pulvérulents en phase solide au moins à la température ambiante de 20°C et à l'humidité relative du milieu environnant de 60%. La phase liquide est absente dans le granulat des premier et deuxième matériaux. Par conséquent, la pénétration du deuxième matériau à l'intérieur du premier matériau à l'aide de l'effet de capillarité ou de la sorption est impossible au moins au cours de la phase de préparation de la composition. Ainsi, les conditions de formation - au cours de la phase de traitement thermique de la composition - à l'intérieur du premier matériau des agglomérés adhésifs (encrassements) comprenant des produits de décomposition du deuxième matériau, ne sont pas réunies. C'est pourquoi le procédé de dopage selon l'invention permet d'obtenir le matériau charbonneux qui dispose d'un degré de pureté des pores a priori plus élevé comparé au charbon mésoporeux dopé selon le procédé connu décrit ci-dessus. Par conséquent, il est constaté une diminution de la résistance interne du supercondensateur dont les électrodes comportent le matériau charbonneux dopé à l'aide du procédé selon l'invention. Cela conduit à son tour à la capacité plus élevée du supércondensateur lors des courants de charge plus élevés. De ce fait, l'énergie volumique et la puissance du supercondensateur augmentent.

De préférence, le premier matériau comprend une première poudre consistant en premières particules solides. Le deuxième matériau comprend une deuxième poudre consistant en deuxièmes particules solides distinctes des premières particules solides.

Grâce à cette caractéristique, la phase de préparation de la composition n'exige pas une qualification spécifique pour un opérateur : les première et deuxième poudres sont faciles à transporter, à peser, à mélanger physiquement aussi bien de manière manuelle que de manière automatisée. En outre, il est possible d'éloigner spatialement un endroit de réalisation de la phase de préparation de la composition et un endroit de réalisation de la phase de traitement thermique ce qui permet d'organiser la production selon une conception modulaire. Aussi, la réalisation de la phase de préparation et la réalisation de la phase de traitement thermique peuvent être espacées en temps ce qui facilite une planification de production.

De préférence, chaque première particule solide comprend un réseau de pores communicant les uns avec les autres. Ces pores comportent au moins :
- des mésopores ayant une largeur de 2*10⁻⁹ m à 50*10⁻⁹ m,
- des micropores ayant une largeur inférieure à 2*10⁻⁹ m.

Dans ces conditions, un maximum de distribution de ces pores selon la largeur se trouve dans un intervalle de 10⁻⁹ m à 3*10⁻⁹ m.

La présence (dans la première particule solide) des pores (non seulement à mésoéchelle mais également à microéchelle) avec le maximum de distribution de ces pores selon la largeur se trouvant dans l'intervalle de 10⁻⁹ m à 3*10⁻⁹ m, contribue à augmenter une superficie de l'électrode réalisée à l'aide du matériau charbonneux dopé à l'aide du procédé selon l'invention. Cela conduit à son tour à la capacité spécifique plus élevée du supercondensateur.

De préférence, les premières et les deuxièmes particules solides ont une taille de l'ordre de 10⁻⁶ m.

Ainsi, les dimensions caractéristiques des premières et deuxièmes particules sont supérieures approximativement de trois ordres de grandeur aux dimensions caractéristiques des pores des premières particules. Il en résulte une impossibilité physique de pénétration pour les deuxièmes particules à l'intérieur des pores des premières particules au moins pendant la phase de préparation de la composition comme cela a déjà été évoqué ci-dessus. Pour la même raison, seuls des produits gazeux issus des réactions chimiques de la décomposition de deuxièmes particules peuvent se trouver dans les pores de premières particules au cours de la phase de traitement thermique de la composition. C'est pourquoi les agglomérés adhésifs (encrassements) comprenant les produits de la décomposition du deuxième matériau sont absents à l'intérieur des pores du premier matériau après la phase de traitement thermique de la composition. Dans ces conditions, même si les produits de la décomposition du deuxième matériau sont détectés, ils se trouvent en phase solide et sont disposés en dehors des pores du premier matériau. Une autre conséquence de l'immense différence entre les dimensions caractéristiques des deuxièmes particules et les dimensions caractéristiques des pores des premières particules, est que le dopage à l'azote du matériau charbonneux s'opère essentiellement en surface des pores des premières particules. Une telle distribution sélective de l'azote (après la décomposition des deuxièmes particules) conduit à une implantation des fragments azotés dans une structure de la superficie du matériau charbonneux dopé. Une telle modification de la nature chimique de la superficie du matériau charbonneux conduit à la diminution de la résistance interne du supercondensateur dont les électrodes comportent le matériau charbonneux dopé à l'aide du procédé selon l'invention. Cela conduit à son tour à la capacité spécifique plus élevée du supercondensateur et à des courants de charge admissibles plus élevés. De ce fait, l'énergie volumique et la puissance du supercondensateur augmentent.

De préférence, une aire totale spécifique de la surface des pores fait au moins 10⁶ m²/kg. Un volume total spécifique de ces pores fait au moins 0,8*10⁻³ m³/kg.

Grâce à cette caractéristique avantageuse, la réduction physique de l'aire totale spécifique de la surface des pores et du volume total spécifique des pores après le dopage des premières particules à l'azote reste insignifiante :
- le rapport de l'aire totale spécifique de la surface des pores avant et après le dopage tend vers l'unité,
- le rapport du volume total spécifique des pores avant et après le dopage tend vers l'unité.

Ainsi, la structure poreuse des premières particules est optimisée dans le procédé de dopage selon l'invention pour exclure a priori un bouchage de pores (du côté de leurs « entrées/sorties ») au cours du procédé de dopage lors de l'implantation des fragments azotés dans la structure de la superficie des premières particules.

De préférence, un volume spécifique des mésopores fait de 20% à 80% du volume total spécifique des pores.

Cette caractéristique avantageuse assure une quantité suffisante des « entrées/sorties » des micropores vers les mésopores dans la première particule. Cela contribue à faciliter et/ou à accélérer une entrée/sortie des ions de l'électrolyte dans/de micropores et, par conséquent, d'accélérer une charge/décharge de l'électrode fabriquée du matériau charbonneux dopé à l'aide du procédé selon l'invention. Cela conduit à son tour à la diminution de la résistance interne et à l'augmentation de la puissance du supercondensateur dont les électrodes comportent le matériau charbonneux dopé à l'aide du procédé selon l'invention.

De préférence, les premières particules solides comportent du charbon actif.

Grâce à cette caractéristique avantageuse, la pénétration de l'azote dans le corps de chaque première particule solide est rendue plus difficile : au cours du dopage l'azote s'implante principalement et précisément dans la superficie des pores du charbon actif (et non pas dans le corps du charbon actif) pour améliorer, comme mentionné ci-dessus, ses caractéristiques électrochimiques et électriques.

De préférence, les deuxièmes particules solides comportent des dérivés de triazine (en particulier, les dérivés de S-triazine).

Au cours de la réalisation de la phase de traitement thermique les dérivés de triazine peuvent dégager une quantité importante de l'ammoniac qui est capable d'entrer en réaction chimique avec les premières particules solides (en particulier, avec le charbon actif). Dans ces conditions - à l'aide de l'ammoniac actif - s'opère une substitution des atomes de carbone (dans des cycles de carbone sur la surface des premières particules solides) par des atomes d'azote et l'implantation de l'azote dans la surface des pores.

De préférence, les dérivés de triazine comporte de la mélamine C₃H₆N₆.

La mélamine est le dérivé de S-triazine. La mélamine est facilement accessible ce qui est particulièrement important pour la production en masse ininterrompue. Ainsi, le procédé de dopage à l'azote du matériau charbonneux selon l'invention est adapté à l'usage non seulement à l'échelle d'un laboratoire de recherche mais aussi à l'échelle d'une usine.

De préférence, le rapport entre la masse de la mélamine et la masse du premier matériau se trouve dans l'intervalle de 0,05 à 0,5.

Grâce à cette caractéristique avantageuse, il est possible d'obtenir une concentration des atomes d'azote sur la surface des pores dans l'intervalle de 10 à 15 pourcents atomiques. Cela contribue à la diminution de la résistance interne et à l'augmentation de la capacité du condensateur à double couche électrique avec les électrodes réalisées à partir du matériau charbonneux traité à l'aide du procédé de dopage selon l'invention.

De préférence, la phase de traitement thermique comprend une première étape consistant à chauffer la composition jusqu'à une première température prédéterminée comprise dans l'une au moins des plages suivantes : (a) de 720°C à 850°C; (b) de 720°C à 800°C.

Ce régime de fonctionnement permet d'optimiser un dégagement des produits gazeux comportant l'azote lors de la décomposition du deuxième matériau. En particulier, la première température prédéterminée peut correspondre à la température maximale à laquelle se termine la décomposition de la mélamine avec le dégagement de l'ammoniac actif. Cela contribue à une consommation optimisée d'énergie lors de la phase de traitement thermique.

Dans une première variante de fonctionnement la première étape de chauffe de la composition jusqu'à la première température prédéterminée se réalise à l'aide d'une montée linéaire en température. Dans ces conditions, la phase de traitement thermique comprend en outre une deuxième étape suivant la première étape et consistant à maintenir, au moins soixante minutes à la première température prédéterminée, la composition chauffée au cours de la première étape.

Ce régime de fonctionnement permet d'optimiser le temps d'interaction chimique entre le matériau charbonneux et les produits gazeux de la décomposition du deuxième matériau comprenant l'azote (de l'ammoniac actif dans le cas où le deuxième matériau est la mélamine). Cela contribue à implanter de manière fiable des fragments azotés dans la structure de la superficie du matériau charbonneux dopé en améliorant ses propriétés électrochimiques et électriques.

De préférence, la montée linéaire en température au cours de la première étape s'opère à une vitesse de 10 à 20 centigrades par minute.

Il est établi expérimentalement que cette vitesse de chauffe de 10°C/min 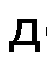 o 20°C/min s'avère optimale pour la décomposition progressive du deuxième matériau pendant laquelle une sortie maximale (pour une température courante correspondante) des produits gazeux azotés est assurée. En particulier, la vitesse de chauffe de 10°C/min à 20°C/min s'avère optimale pour un dégagement maximal (à une température courante corresponsante) de l'ammoniac actif à partir d'une masse unitaire de la mélamine. Cela contribue à une consommation optimisée d'énergie lors de la phase de traitement thermique et minimise une consommation de deuxième matériau.

Dans une deuxième variante de fonctionnement qui est alternative à la première variante la phase de traitement thermique comprend :
- une troisième étape consistant à chauffer, à l'aide d'une montée linéaire en température, la composition jusqu'à une deuxième température prédéterminée comprise dans une plage de 380°C à 420°C,
- une quatrième étape suivant la troisième étape et consistant à maintenir, au moins trente minutes à la deuxième température prédéterminée, la composition chauffée au cours de la troisième étape.

Dans ces conditions, la première étape suit la quatrième étape, et la phase de traitement thermique comprend en outre une deuxième étape suivant la première étape et consistant à maintenir, au moins soixante minutes à la première température prédéterminée, la composition chauffée au cours de la première étape.

A cause, par exemple, d'un vice de stockage et/ou de transport, l'un au moins des deux corps du granulat peut avoir une humidité supérieure à une valeur seuil prédéterminée pour une température donnée de réalisation de la phase de préparation de la composition. Cela crée des conditions non optimales pour doper le matériau charbonneux à l'azote lors de la première variante de fonctionnement du procédé de dopage. La deuxième variante de fonctionnement permet de réaliser une carbonisation partielle primaire du granulat à la deuxième température (comprise dans la plage de 380°C à 420°C) ce qui élimine de manière garantie l'humidité des deux corps pulvérulents. Ce n'est qu'après une telle « normalisation » préliminaire que le mélange des premier et deuxième matériaux est porté (comme dans la première variante de fonctionnement) à la première température (comprise dans la plage de 720°C à 850°C ou dans la plage de 720°C à 800°C) optimisée d'un point de vue de dégagement des produits gazeux azotés lors de la décomposition du deuxième matériau.

En outre, le maintien du granulat à la deuxième température pendant au moins trente minutes permet de réguler de manière plus fine le dégagement des produits gazeux azotés lors de la décomposition du deuxième matériau. Cette fine régulation d'amenée de l'azote au cours du dopage contribue davantage à l'implantation de l'azote notamment dans la superficie des pores du premier matériau (et non pas à l'intérieur de son corps).

De préférence, la montée linéaire en température au cours d'au moins l'une des étapes parmi : (a) la première étape ; (b) la troisième étape, s'opère à une vitesse de 10 à 20 centigrades par minute.

Il est établi expérimentalement que cette vitesse de chauffe de 10°C/min à 20°C/min s'avère optimale pour la décomposition progressive du deuxième matériau pendant laquelle une sortie maximale (à une température courante corresponsante) des produits gazeux azotés est assurée. En particulier, la vitesse de chauffe de 10°C/min à 20°C/min s'avère optimale pour un dégagement maximal (à une température courante corresponsante) de l'ammoniac actif à partir d'une masse unitaire de la mélamine. Cela contribue à une consommation optimisée d'énergie lors de la phase de traitement thermique et minimise une consommation de deuxième matériau.

Selon un deuxième de ses aspects, l'invention concerne un charbon actif dopé à l'azote selon le procédé de dopage selon l'invention. Ce charbon actif est destiné aux électrodes pour un condensateur à double couche électrique. Ce charbon actif comprend un réseau de pores communicant les uns avec les autres et comportant au moins des mésopores ayant une largeur de 2*10⁻⁹ m à 50*10⁻⁹ m. Ces pores comportent en outre au moins des micropores ayant une largeur inférieure à 2*10⁻⁹ m. Un maximum de distribution de ces pores (comprenant les mésopores et les micropores) selon la largeur se trouve dans un intervalle de 10⁻⁹ m à 3*10⁻⁹ m. La teneur en azote sur la surface des pores est supérieure à 10% en pourcents atomiques. La teneur en azote dans le corps du charbon actif est inférieure à 8% en pourcents en poids.

Une telle double limitation en contenu d'azote, d'une part, sur la surface des pores du charbon actif dopé, et, d'autre part, dans le corps du charbon actif, crée des conditions correspondantes, nécessaire et suffisante, pour réduire la résistance interne du condensateur à double couche électrique comprenant des électrodes sur la base de ce charbon actif dopé. Simultanément la capacité spécifique, l'énergie volumique et la puissance de ce condensateur augmentent.

En effet, d'une part, la teneur en azote sur la surface des pores étant en pourcents atomiques, selon l'invention, supérieure à 10%, renforce les propriétés du charbon actif en tant que donneur d'électron, modifie le travail de sortie d'électron et la mouillabilité de surface, augmente l'efficacité de l'utilisation de la surface ouverte pour accumuler de l'énergie électrique dans la double couche électrique à l'interface des phases charbon/électrolyte. Cela contribue à diminuer la résistance interne du condensateur à double couche électrique comprenant des électrodes à base de ce charbon actif dopé.

D'autre part, il résulte des expériences du déposant de la présente demande avec des différents charbons actifs qu'au contraire, la présence de l'azote dans le corps (c'est-à-dire, dans la masse) du charbon actif contribue à augmenter la résistance spécifique de l'électrode fabriquée à partir d'un tel charbon actif. C'est pourquoi, il est important que la teneur en azote dans le corps du charbon actif n'excède pas une valeur seuil définie qui, selon l'invention, est inférieure en pourcents en poids à 8%. Dans ces conditions, l'augmentation de la résistance spécifique de l'électrode due à la présence d'azote dans le corps du charbon actif est négligeable comparée à la diminution de la résistance spécifique de l'électrode à cause de la teneur en azote sur la surface des pores évoquée ci-dessus.

Les caractéristiques de la structure poreuse du charbon actif initial avant son dopage selon l'invention et du charbon actif recherché obtenu à l'issu de la réalisation du procédé de dopage selon l'invention, sont évaluées par le déposant de la présente demande conformément à un standard international [2], à l'aide des mesures des isothermes de sorption/désorption et des calculs ultérieurs en utilisant la théorie non linéaire de la fonctionnelle de la densité (en anglais « Non-Local Density Functional Theory » ou « NLDFT »).

Le charbon actif dopé à l'azote à l'aide du procédé de dopage selon l'invention comporte de l'azote principalement sur la surface des pores. Dans ces conditions, l'azote sur la surface des pores a une forme des hétéroatomes tertiaires compris dans un système de liaisons carbone-azote.

Selon les expériences du déposant, cette caractéristique avantageuse contribue à modifier le potentiel électrochimique de l'électrode fabriquée à partir de ce charbon actif et destinée à un condensateur à double couche électrique. Cette modification du potentiel électrochimique de l'électrode conduit à modifier l'activité de l'électrode dans des procédés de décomposition électrocatalytique de l'électrolyte organique. Cela contribue à augmenter la tension de travail du supercondensateur ce qui, à son tour, élargit le domaine d'application du supercondensateur.

Selon un troisième de ses aspects, l'invention concerne une utilisation du charbon actif dopé à l'azote selon l'invention pour fabriquer l'électrode destinée à un condensateur à double couche électrique.

L'utilisation du charbon actif dopé à l'azote selon l'invention contribue à diminuer la résistance interne du condensateur à double couche électrique et, par conséquent, à augmenter sa capacité spécifique pour les courants de charge élevés et à augmenter l'énergie volumique et la puissance.

D'autres caractéristiques et avantages de l'invention ressortent clairement de la description qui en est faite ci-après, à titre indicatif et nullement limitatif, en référence aux dessins annexés, dans lesquels :
- la figure 1 représente schématiquement une succession des étapes qui correspondent à une première variante de fonctionnement du procédé de dopage à l'azote du matériau charbonneux destiné aux électrodes pour un condensateur à double couche électrique,
- la figure 2 représente schématiquement une succession des étapes qui correspondent à une deuxième variante de fonctionnement du procédé de dopage à l'azote du matériau charbonneux destiné aux électrodes pour un condensateur à double couche électrique,
- la figure 3 représente schématiquement un exemple (vue simplifié de côté en coupe) d'un condensateur à double couche électrique comprenant des électrodes en charbon actif,
- la figure 4 représente une relation entre la teneur massique N (en pourcents en poids) en azote dans le charbon actif après son dopage à l'aide du procédé de dopage selon l'invention et le rapport « mélamine/ charbon actif » m_{M}/m₃₁ propre à ce dopage,
- la figure 5 représente une relation entre les caractéristiques (capacité spécifique C ; résistance spécifique R) des condensateurs à double couche électrique dont les électrodes sont fabriquées à partir du charbon actif dopé à l'aide du procédé de dopage selon l'invention, et la teneur massique N (en pourcents en poids) en azote dans le charbon actif après son dopage,
- la figure 6 représente une relation de la capacité spécifique massique Σ (c'est-à-dire, la capacité dans une unité de poids) en fonction de la densité ρₗ du courant de charge pour les condensateurs à double couche électrique comprenant :
   o courbe 1 : des électrodes en charbon actif non traité (c'est-à-dire, non dopé),
   o courbe 2 : des électrodes en charbon actif dopé à l'aide du procédé de dopage selon l'invention ; la teneur massique N (en pourcents en poids) en azote dans le charbon actif après son dopage est 4,82%,
- la figure 7 représente une relation de la capacité spécifique massique Σ en fonction de la densité ρₗ du courant de charge pour des condensateurs à double couche électrique connus comprenant des électrodes dopées à l'aide du procédé de dopage connu décrit dans [1],
- la figure 8 représente une courbe volt/ampère cyclique pour un condensateur à double couche électrique comprenant des électrodes en charbon actif non traité (c'est-à-dire, non dopé),
- la figure 9 représente une courbe volt-ampère cyclique pour un condensateur à double couche électrique comprenant des électrodes en charbon actif dopé à l'aide du procédé de dopage selon l'invention ; la teneur massique N (en pourcents en poids) en azote dans le charbon actif après son dopage est 4,82%,
- la figure 10 représente une relation entre les caractéristiques (capacité spécifique C et résistance spécifique R) et la tension U de cyclage pour un condensateur à double couche électrique comprenant des électrodes en charbon actif dopé à l'aide du procédé de dopage selon l'invention : la teneur massique N (en pourcents en poids) en azote dans le charbon actif après son dopage est 4,82%.

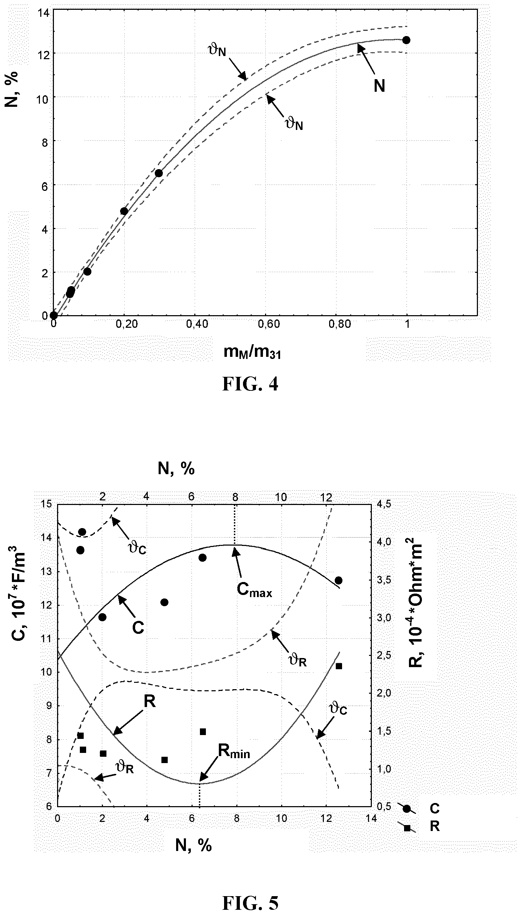

Quelques précisions concernant les figures 4, 5 et 7 sont détaillées ci-dessous avant la description de l'invention proprement dite.

Les données expérimentales sur les figures 4 et 5 obtenues au cours des mesures sont représentées à l'aide des points. Ensuite ces données expérimentales ont été traitées à l'aide d'un bloc de logiciels « STATISTICA ». Les lignes de régression de ces données expérimentales sont obtenues via des calculs à l'aide de la fonction polynomiale de deuxième dergé qui offre la meilleure convergence de données expérimentales et calculées. Les résultats de ces calcules sont représentés graphiquement en forme des courbes continues correspondantes : courbe N sur la figure 4 ; courbes C et R sur la figure 5. Une zone avec un intervalle de confiance égal à 0,95 a été calculée en supplément autour de chacune de ces lignes continues (lignes de régression). Les limites de chacune de ces zones sont représentées par des lignes pointillées correspondantes : courbe ϑ_{N} sur la figure 4 ; courbes ϑ_{C} et ϑ_{R} sur la figure 5.

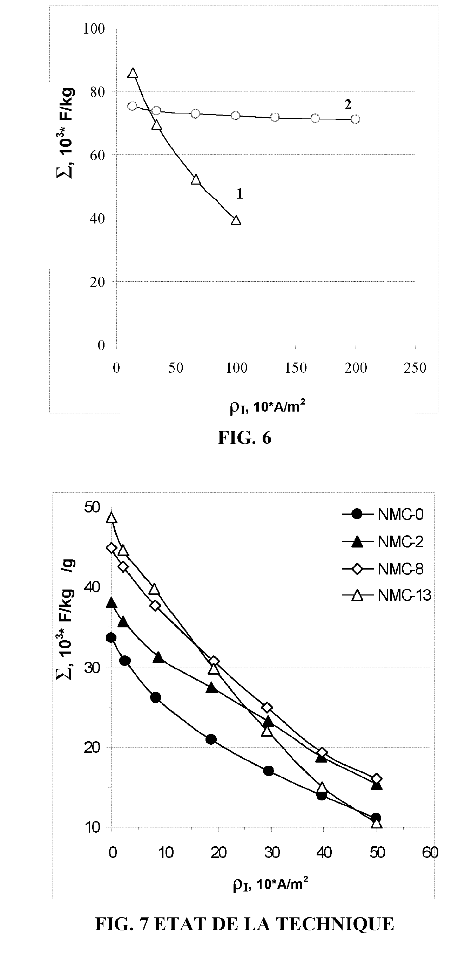

La figure 7 représente quatre courbes avec des points, repérées à l'aide des abréviations «NMC-0», «NMC-2», «NMC-8», «NMC-13» et décrites dans [1]. Les mesures sont réalisées pour les quatre condensateurs à double couche électrique selon [1], distincts les uns des autres, dont les électrodes ont une différente teneur massique (en pourcents en poids) en azote dans le charbon actif, à savoir :
- les points de la courbe «NMC-0» sont obtenus pour le condensateur-étalon connu dans lequel les électrodes en charbon présentent la teneur massique en azote égale à 0% (c'est-à-dire, l'azote est absent),
- les points de la courbe «NMC-2» sont obtenus pour le condensateur connu dans lequel les électrodes en charbon présentent la teneur massique en azote égale à 2%,
- les points de la courbe «NMC-8» sont obtenus pour le condensateur connu dans lequel les électrodes en charbon présentent la teneur massique en azote égale à 8%,
- les points de la courbe «NMC-13» sont obtenus pour le condensateur connu dans lequel les électrodes en charbon présentent la teneur massique en azote égale à 13%.

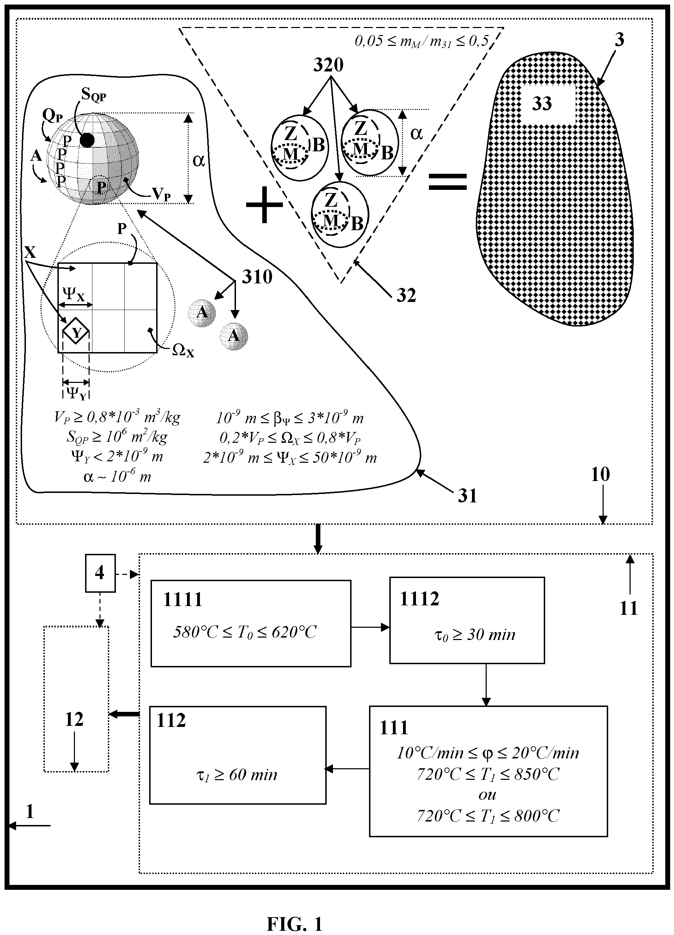

Comme annoncé précédemment et illustré sur les figures 1 à 10, l'invention concerne :
- selon un premier de ses aspects, un procédé de dopage 1 à l'azote d'un matériau charbonneux destiné aux électrodes 20 pour un condensateur 2 à double couche électrique,
- selon un deuxième de ses aspects, un charbon actif dopé à l'azote à l'aide du procédé de dopage 1 et destiné aux électrodes 20 pour un condensateur 2 à double couche électrique,
- selon un troisième de ses aspects, une utilisation du charbon actif dopé à l'azote selon l'invention pour fabriquer l'électrode 20 destinée à un condensateur 2 à double couche électrique.

Comme illustré sur les figures 1-2, le procédé de dopage 1 à l'azote du matériau charbonneux comprend, au moins :
- une phase de préparation 10 d'une composition 3 d'un premier matériau 31 comprenant du charbon et d'un deuxième matériau 32 comprenant de l'azote, et
- une phase de traitement thermique 11 de la composition 3 dans une atmosphère d'un gaz inerte 4 pour obtenir le matériau charbonneux dopé à l'azote.

Selon l'invention, la composition 3 se présente comme un mélange sec 33 du premier et du deuxième matériaux 31, 32.

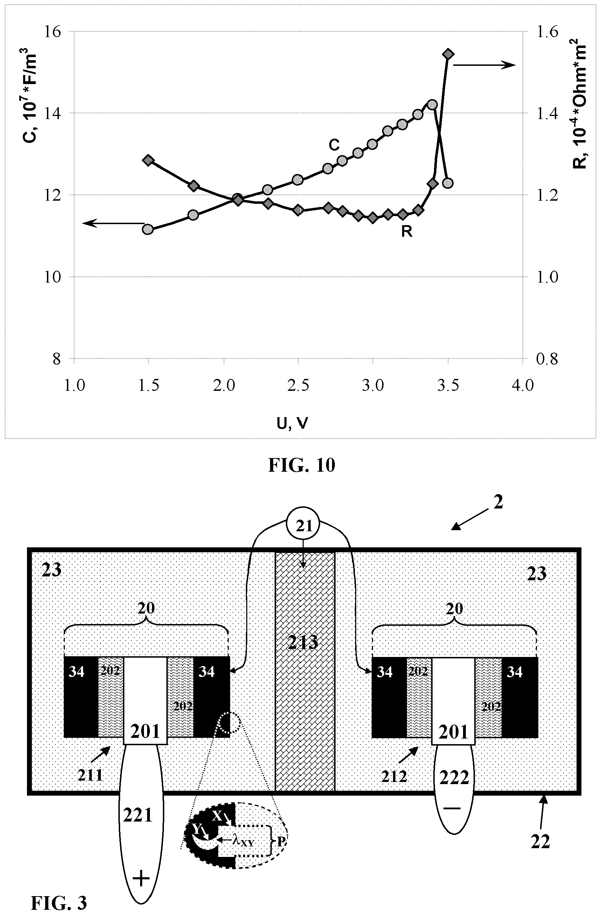

Le matériau charbonneux modifié à l'aide du procédé de dopage 1 est destiné aux électrodes 20. Comme mentionné ci-dessus, ces dernières sont utilisées dans un condensateur 2 à double couche électrique (figure 3) habituellement appelés supercondensateur ou ultracondensateur car sa capacité spécifique peut atteindre 10⁷ Farad/m³.

De préférence, la phase de préparation 10 de la composition 3 est réalisée à la température ambiante (normalement 20°C).

De préférence, la phase de préparation 10 de la composition 3 est réalisée à l'humidité relative de 60% du milieu environnant.

Normalement un appareillage spécifique n'est pas nécessaire pour assurer lesdites conditions en température et/ou en humidité. Cela facilite la réalisation du procédé de dopage 1.

De préférence, le procédé de dopage 1 comprend en outre une phase de refroidissement 12 du matériau charbonneux dopé à l'azote jusqu'à une température prédéterminée, par exemple, jusqu'à la température ambiante (normalement 20°C). La phase de refroidissement 12 suit la phase de traitement thermique 11 (figures 1-2).

Un tel fonctionnement contribue à réduire un risque de brûlure pour un opérateur lors des manipulations avec le matériau charbonneux dopé à l'azote. Ainsi, le procédé de dopage 1 devient plus sûr.

De préférence, la phase de refroidissement 12 est réalisée dans une atmosphère d'un gaz inerte 4 (figures 1-2).

Un tel fonctionnement contribue à préserver une pureté chimique du matériau charbonneux dopé à l'azote car cela exclut un contact de ce matériau charbonneux au cours de son refroidissement avec un milieu agressif (par exemple, avec un oxygène de l'air).

De préférence, l'atmosphère d'un gaz inerte comprend l'un au moins parmi les gaz suivants : (a) azote ; (b) argon.

Ces gaz inertes sont facilement accessibles ce qui est particulièrement important pour une production en masse ininterrompue. Ainsi, le procédé de dopage 1 est adapté à l'usage non seulement à l'échelle d'un laboratoire de recherche mais aussi à l'échelle d'une usine.

De préférence, la phase de préparation 10 de la composition 3 comprend l'une au moins parmi les étapes suivantes (non représentées sur les figures 1-2) consistant en :
- identifier (par exemple, à l'aide d'un dispositif de lecture optique) le premier et le deuxième matériau 31, 32 (c'est-à-dire, les réactifs de départ) dans un dépôt (par exemple, dans un container adapté au stockage des milieux pulvérulents),
- amener (par exemple, par un transport pneumatique) le premier et le deuxième matériau 31, 32 du dépôt (de préférence, dans une zone de mélange isolée du milieu environnant pour, d'une part, exclure un contact de l'opérateur avec les réactifs de départ, et pour, d'autre part, contribuer à normaliser les paramètres de température et d'humidité de chacun des réactifs) ;
- peser le premier et le deuxième matériau 31, 32 (par exemple, à l'aide d'une balance),
- laisser l'un au moins parmi le premier et le deuxième matériau 31, 32 dans des conditions climatiques prédéterminées pendant un laps de temps prédéterminé (pour normaliser les paramètres de la température et de l'humidité de l'un au moins parmi le premier et le deuxième matériau 31, 32),
- mélanger physiquement (par exemple, à l'aide d'un mélangeur) le premier et le deuxième matériau 31, 32 l'un avec l'autre (par exemple, dans la zone de mélange) dans une proportion prédéterminée (pour former le milieu pulvérulent des réactifs de départ).

Comme illustré sur les figures 1-2, le premier matériau 31 comprend une première poudre 310 consistant en premières particules solides A. Le deuxième matériau 32 comprend une deuxième poudre 320 consistant en deuxièmes particules solides B distinctes des premières particules solides A.

Cela facilite le transport du premier et du deuxième matériau 31, 32 à l'aide du transport pneumatique.

De préférence, chaque première particule solide A comprend un réseau de pores P communicant les uns avec les autres. Ces pores P comportent au moins :
- des mésopores X ayant une largeur Ψ_{X} de 2*10⁻⁹ m à 50*10⁻⁹ m : 2*10⁻⁹ m ≤ Ψ_{X} ≤ 50*10⁻⁹ m,
- des micropores Y ayant une largeur Ψ_{Y} inférieure à 2*10⁻⁹ m : Ψ_{Y} < 2*10⁻⁹ m.

Dans ces conditions, un maximum β_{Ψ} de distribution de ces pores P selon la largeur Ψ_{X}, Ψ_{Y} se trouve dans un intervalle de 10⁻⁹ m à 3*10⁻⁹ m : 10⁻⁹m≤β_{Ψ}≤3*10⁻⁹ m.

De préférence, les premières et les deuxièmes particules solides A, B ont une taille α de l'ordre de 10⁻⁶ m : α ~ 10⁻⁶ m.

De préférence, une aire totale spécifique S_{QP} de la surface Q_{P} des pores P fait au moins 10⁶ m²/kg : S_{QP} ≥ 10⁶ m²/kg. Un volume total spécifique V_{P} de ces pores P fait au moins 0,8*10⁻³ m³/kg : V_{P} ≥ 0,8*10⁻³ m³/kg.

De préférence, un volume spécifique Ω_{X} des mésopores X fait de 20% à 80% du volume total spécifique V_{P} des pores P: 0,2*V_{P} ≤ Ω_{X} ≤ 0,8*V_{P}.

De préférence, les premières particules solides A comportent du charbon actif.

De préférence, les deuxièmes particules solides B comportent des dérivés de triazine Z.

De préférence, les dérivés de triazine Z comporte de la mélamine M (sa formule chimique : C₃H₆N₆).

De préférence, le rapport entre la masse m_{M} de la mélamine M et la masse m₃₁ du premier matériau 31 se trouve dans l'intervalle de 0,05 à 0,5 : 0,05 ≤ m_{M}/m₃₁ ≤ 0,5.

Comme une alternative à la mélamine M, les dérivés de triazine Z peuvent comporter, par exemple, melam C₆H₉N₁₁, ou melem C₆H₆N₁₀, ou melon C₁₈H₉N₂₇, ou un mélange des deux au moins parmi eux l'un avec l'autre, ou un mélange de l'un au moins parmi eux avec la mélamine M.

Lesdites substances chimiques sont facilement accessibles ce qui est particulièrement important pour la production en masse ininterrompue, en particulier, en cas de problème avec la livraison de la mélamine M. Ainsi, le procédé de dopage 1 est suffisamment flexible et adapté à l'usage non seulement à l'échelle du laboratoire de recherche mais aussi à l'échelle de l'usine.

Comme illustré sur les figures 1-2, la phase de traitement thermique 11 comprend une première étape 111 consistant à chauffer la composition 3 jusqu'à une première température prédéterminée T₁. Cette dernière est comprise dans l'une au moins des plages suivantes : (a) de 720°C à 850°C : 720°C ≤ T₁ ≤ 850°C; (b) de 720°C à 800°C : 720°C ≤ T₁ ≤ 800°C.

La première plage 720°C ≤ T₁ ≤ 850°C assure le dopage plus intense du matériau charbonneux car elle permet de chauffer la composition 3 jusqu'à la première température prédéterminée plus élevée T₁ = 850°C. La deuxième plage 720°C ≤ T₁ ≤ 800°C contribue à réduire les dépenses énergétiques car, au cours du procédé de dopage, la première température prédéterminée est limitée par la valeur de 800°C: T₁ = 800°C.

Une première variante de fonctionnement du procédé de dopage 1 est illustrée sur la figure 1. Dans ces conditions, la première étape 111 de chauffe de la composition 3 jusqu'à la première température prédéterminée T₁ se réalise à l'aide d'une montée linéaire en température. La phase de traitement thermique 11 comprend en outre une deuxième étape 112 suivant la première étape 111 et consistant à maintenir la composition 3 chauffée au cours de la première étape 111 à la première température prédéterminée T₁ pendant au moins soixante minutes : τ₁ ≥ 60 min.

La montée linéaire en température en cours de la première étape 111 dans la première variante de fonctionnement s'opère avec une vitesse ϕ de 10 à 20 centigrades par minute : 10°C/min ≤ ϕ ≤ 20°C/min.

De préférence, la phase de traitement thermique 11 comprend :
- une première étape intermédiaire 1111 consistant à chauffer (par exemple, à l'aide de la montée linéaire en température avec la vitesse ϕ de 10 à 20 centigrades par minute : 10°C/min ≤ ϕ ≤ 20°C/min) la composition 3 jusqu'à une température intermédiaire prédéterminée T₀. Cette dernière est comprise dans une troisième plage de 580°C à 620°C : 580°C ≤ T₀ ≤ 620°C,
- une deuxième étape intermédiaire 1112 suivant la première étape intermédiaire 1111 et consistant à maintenir la composition 3 chauffée au cours de la deuxième étape intermédiaire 1112 à la température intermédiaire prédéterminée T₀ pendant au moins trente minutes: τ₀ ≥ 30 min.

Dans ces conditions (figure 1), la première étape 11 suit la deuxième étape intermédiaire 1112.

La présence des première et deuxième étapes intermédiaires 1111, 1112 contribue à un réchauffement plus homogène de la composition 3 au cours de la phase de traitement thermique 11. Cela contribue à améliorer la qualité de dopage notamment dans les conditions de la production en masse lorsque le volume de la composition 3 dépasse des dizaines de kilogrammes. Ainsi, le procédé de dopage 1 est suffisamment flexible et adapté à l'usage non seulement à l'échelle du laboratoire de recherche mais aussi à l'échelle de l'usine.

En outre, le maintien du granulat à la température intermédiaire 580°C ≤ T₀ ≤ 620°C pendant au moins trente minutes (τ₀ ≥ 30 min) permet de réguler de manière plus fine un dégagement des produits gazeux azotés lors d'une décomposition du deuxième matériau. Cette fine régulation d'amenée des combinaisons azotées au cours du procédé de dopage contribue davantage à l'implantation de l'azote notamment dans la superficie des pores du premier matériau (et non pas à l'intérieur de son corps).

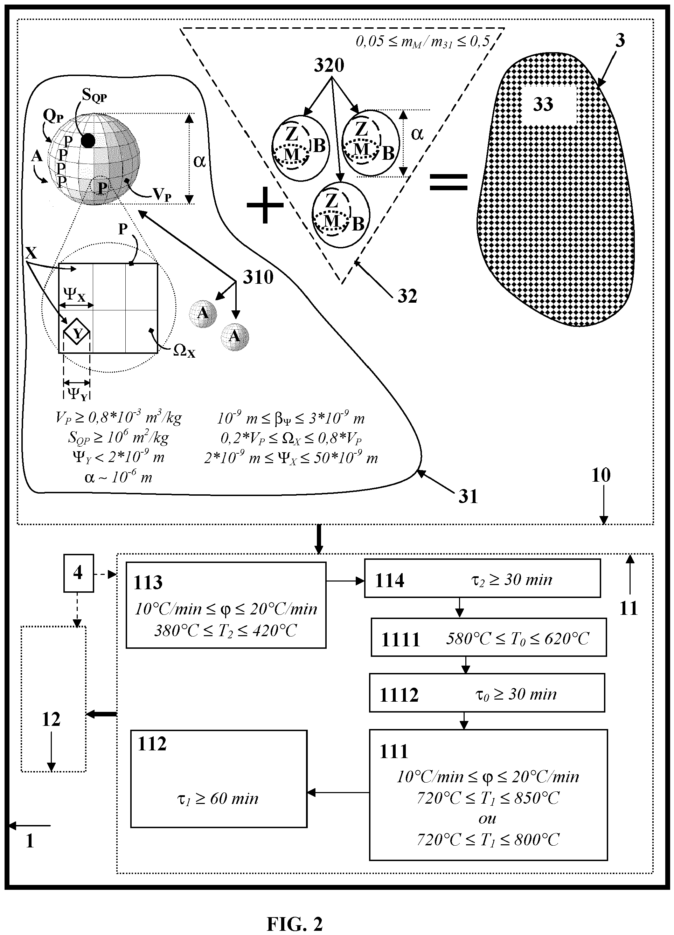

Une deuxième variante (alternative à la première variante ci-dessus) de fonctionnement du procédé de dopage 1 est illustrée sur la figure 2. Dans ces conditions, la phase de traitement thermique 11 comprend:
- une troisième étape 113 consistant à chauffer, à l'aide d'une montée linéaire en température, la composition 3 jusqu'à une deuxième température prédéterminée T₂. Cette dernière est comprise dans une quatrième plage de 380°C à 420°C: 380°C ≤ T₂ ≤ 420°C,
- une quatrième étape 114 suivant la troisième étape 113 et consistant à maintenir la composition 3 chauffée au cours de la troisième étape 113 à la deuxième température prédéterminée T₂ pendant au moins trente minutes: τ₂ ≥ 30 min,

Comme illustré sur la figure 2, la première étape 111 suit la quatrième étape 114. La phase de traitement thermique 11 comprend en outre une deuxième étape 112 suivant la première étape 111 et consistant à maintenir la composition 3 chauffée au cours de la première étape 111 à la première température prédéterminée T₁ pendant au moins soixante minutes: τ₁ ≥ 60 min.

La montée linéaire en température en cours de l'une au moins parmi les étapes : (a) la première étape 111 ; (b) la troisième étape 113, s'opère, dans la deuxième variante de fonctionnement, avec la vitesse ϕ de 10 à 20 centigrades par minute : 10°C/min ≤ ϕ ≤ 20°C/min.

Comme dans la première étape de fonctionnement, la phase de traitement thermique 11 comprend, de préférence, dans la deuxième étape de fonctionnement :
- une première étape intermédiaire 1111 consistant à chauffer (par exemple, à l'aide de la montée linéaire en température avec la vitesse ϕ de 10 à 20 centigrades par minute : 10°C/min ≤ ϕ ≤ 20°C/min) la composition 3 jusqu'à la température intermédiaire prédéterminée T₀. Cette dernière est comprise dans la troisième plage de 580°C à 620°C : 580°C ≤ T₀ ≤ 620°C,
- une deuxième étape intermédiaire 1112 suivant la première étape intermédiaire 1111 et consistant à maintenir la composition 3 chauffée au cours de la deuxième étape intermédiaire 1112 à la température intermédiaire prédéterminée T₀ pendant au moins trente minutes: τ₀ ≥ 30 min.

Dans ces condition (figure 2), la première étape intermédiaire 1111 suit la quatrième étape 114 et la première étape 111 suit la deuxième étape intermédiaire 1112.

Les avantages liés avec la présence des première et deuxième étapes intermédiaires 1111, 1112 dans la deuxième variante de fonctionnement du procédé de dopage 1 sont semblables à ceux discutés ci-dessus en rapport avec la première variante de fonctionnement du procédé de dopage 1.

L'invention concerne un charbon actif dopé à l'azote (par exemple, à l'aide du procédé de dopage 1 selon l'invention) et destiné aux électrodes 20 pour un condensateur 2 à double couche électrique. Ce charbon actif comprend un réseau de pores P communicant les uns avec les autres et comportant au moins des mésopores X. Ces derniers ont une largeur Ψ_{X} de 2*10⁻⁹ m à 50*10⁻⁹ m : 2*10⁻⁹ m ≤ Ψ_{X} ≤ 50*10⁻⁹ m.

Selon l'invention, la teneur en azote dans le charbon actif satisfait simultanément à deux conditions limitatives :
- d'une part, la teneur en azote sur la surface Q_{P} des pores P du charbon actif est supérieure à 10% en pourcents atomiques, et
- d'autre part, la teneur N en azote dans le corps du charbon actif (c'est-à-dire, dans la masse du charbon) est inférieure à 8% en pourcents en poids.

Le charbon actif comporte l'azote principalement sur la surface Q_{P} des pores P. Dans ces conditions, l'azote sur la surface Q_{P} des pores P a une forme des hétéroatomes tertiaires compris dans un système de liaisons carbone-azote.

De préférence, ces pores P comportent en outre au moins des micropores Y ayant une largeur Ψ_{Y} inférieure à 2*10⁻⁹ m : Ψ_{Y} < 2*10⁻⁹ m. Dans ces conditions, un maximum β_{Ψ} de distribution de ces pores P selon la largeur Ψ_{X}, Ψ_{Y} se trouve dans un intervalle de 10⁻⁹ m à 3*10⁻⁹ m : 10⁻⁹ m ≤ β_{Ψ} ≤ 3*10⁻⁹ m.

L'invention concerne également une utilisation du charbon actif mentionné ci-dessus et dopé à l'azote à l'aide du procédé de dopage 1 pour fabriquer une électrode 20 destinée à un condensateur 2 à double couche électrique.

Le dopage du charbon actif à l'aide du procédé de dopage 1 selon l'invention est décrit dans un premier exemple ci-dessous.

Il est choisi, comme le premier matériau 31 comprenant du charbon, la première poudre 310 dont les premières particules solides A consistent en charbon actif et présentent les caractéristiques de porosité suivantes :
- l'aire totale spécifique S_{QP} de la surface Q_{P} des pores P fait 10⁶ m²/kg : S_{QP} = 10⁶ m²/kg,
- le volume total spécifique V_{P} de ces pores P fait au moins 0,88*10⁻³ m³/kg : V_{P} = 0,88*10⁻³ m³/kg,
- les pores P du charbon actif comprennent :
   ○ des mésopores X ayant une largeur Ψ_{X} de 2*10⁻⁹ m à 50*10⁻⁹ m : 2*10⁻⁹ m ≤ Ψ_{X} ≤ 50*10⁻⁹ m,
   ○ des micropores Y ayant une largeur Ψ_{Y} inférieure à 2*10⁻⁹ m : Ψ_{Y} < 2*10⁻⁹ m,
- le volume spécifique Ω_{X} des mésopores X fait 35,2% du volume total spécifique V_{P} des pores P : Ω_{X} = 35,2 %,
- le diamètre des premières particules solides A fait de 20*10⁻⁶ m à 100*10⁻⁶ m.

Comme déjà mentionné ci-dessus, les caractéristiques de porosité sont estimées ici et plus loin selon le standard ISO 15901-3:2007 [2] mentionné ci-dessus, à l'aide des mesures des isothermes de sorption/désorption et des calculs ultérieurs en utilisant la théorie non linéaire de la fonctionnelle de la densité (repérée ci-après comme « NLDFT »).

Il est choisi, comme le deuxième matériau 32 comprenant de l'azote, la deuxième poudre 320 dont les deuxièmes particules solides B consistent en mélamine M.

Au cours de la phase de préparation 10, les portions de 50*10⁻³ kg de la poudre du charbon actif sont broyées dans une cuvette à broyer en agate avec des quantités différentes (2,5*10⁻³; 5*10⁻³; 10*10⁻³; 15*10⁻³; 50*10⁻³ kg) de la poudre de la mélamine M, jusqu'à la formation des mélanges homogènes correspondants. Le rapport entre la masse m_{M} de la mélamine M et la masse m₃₁ du premier matériau 31 (c'est-à-dire, du charbon actif) fait dans ces mélanges en unités relatives : m_{M}/m₃₁ = 0,05; 0,10; 0,20; 0,30; 1,00 respectivement.

Lors de la phase de traitement thermique 11, les mélanges obtenus sont placés dans un réacteur fabriqué en quartz. Ensuite, ce réacteur en quartz est disposé dans un four (habituellement, dans un four électrique). Puis, l'argon est soufflé dans le réacteur. Dans cet exemple on utilise la deuxième variante de fonctionnement du procédé de dopage 1 décrite ci-dessus (figure 2). C'est pourquoi, dans le four, il se passe d'abord la montée linéaire de réacteur en température avec la vitesse ϕ = 10°C/min jusqu'à la (deuxième) température T₂ = 400°C. Ensuite, les mélanges sont maintenus à cette (deuxième) température T₂ = 400°C pendant trente minutes : τ₂ = 30 minutes. Puis, le réacteur est chauffé avec la vitesse ϕ = 10°C/min jusqu'à la température intermédiaire T₀ = 600°C. Ensuite, les mélanges sont maintenus à cette température intermédiaire T₀ = 600°C pendant trente minutes : τ₀ = 30 minutes. Après ce réacteur est chauffé avec la vitesse ϕ = 10°C/min jusqu'à la (première) température T₁ = 800°C. Ensuite, les mélanges sont maintenus à cette (première) température T₁ = 800°C pendant soixante minutes : τ₁ = 60 minutes.

Au cours de la phase de refroidissement 12, le réacteur en quartz avec le charbon actif dopé à l'azote est laissé se refroidir spontanément jusqu'à la température ambiante de 20°C dans l'atmosphère d'argon.

Les charbons actifs ainsi obtenus sont analysés à l'aide d'une technique de mesures des isothermes de sorption/désorption d'azote gazeux à soixante dix-sept degrés Kelvin (en anglais «NLDFT- N₂ - carbon equilibrium transition kernel at 77 K») en utilisant des analyseurs «AUTOSORB-6B» et «NOVA 2200e» de la société «Quantachrome Instruments» dont la page web est située à l'adresse : www.quantachrome.com.

Le logiciel AS1Win, version 2.01, annexé aux analyseurs de la société «Quantachrome Instruments», comprend une série des modèles de traitement des isothermes de sorption/désorption d'azote par les matériaux de diverse nature.

Pour évaluer les isothermes de sorption/désorption d'azote obtenues dans le présent exemple, on utilise le modèle (en anglais «slit-pore») applicable pour les pores P dont la largeur est comprise dans l'intervalle de 0,35*10⁻⁹ m à 40*10⁻⁹ m.

Les échantillons des charbons actifs dopés obtenus présentant une masse de 3*10⁻⁵ kg à 9*10⁻⁵ kg sont placés dans des cuvettes en verre pour sorption (le diamètre extérieur de chaque cuvette en verre fait 4*10⁻³ m). Ces échantillons sont dégazés à 180°C pendant 20 h. Cette procédure est nécessaire pour libérer complètement la structure poreuse des échantillons obtenus en charbons actifs dopés de traces d'air et d'autres sorbants.

Les échantillons des charbons actifs dopés décrits ci-dessus sont analysés conformément aux instructions jointes aux analyseurs de la société «Quantachrome Instruments». Ces mesures permettent d'identifier les caractéristiques suivantes de la structure poreuse des charbons actifs dopés à l'aide du procédé de dopage 1 :
- l'aire totale spécifique S_{QP} de la surface Q_{P} des pores P,
- le volume total spécifique V_{P} de ces pores P,
- le maximum β_{Ψ} de distribution de ces pores P selon la largeur Ψ_{X}, Ψ_{Y} (qui correspond à la valeur la plus probable de la largeur des pores P dans le volume total spécifique V_{P} de ces pores P),
- le volume spécifique Ω_{X} des mésopores X dans le volume total spécifique V_{P} des pores P.

Les résultats des mesures sont représentés dans le Tableau 1 ci-dessous.

**Tableau 1.**

| Rapport entre la masse de la mélamine M et la masse du charbon actif dans le mélange | Caractéristiques de la structure poreuse des charbons actifs | | | |
|---|---|---|---|---|
| AVANT dopage, | S_{QP}, | V_{P}, | β_{Ψ}, | Ω_{X} |
| m_{M}/m₃₁, | m²/kg | m³/kg | m | % |
| unités relatives | | | | |
| ----- | **AVANT dopage** | | | |
| 0 | 1001*10³ | 0,884*10⁻³ | 1,23*10⁻⁹ | 35,2 |
| ----- | **APRES dopage** | | | |
| 0,05 | 906*10³ | 0,797*10⁻³ | 1,18*10⁻⁹ | 57,2 |
| 0,10 | 906*10³ | 0,703*10⁻³ | 1,23*10⁻⁹ | 50,2 |
| 0,20 | 850*10³ | 0,720*10⁻³ | 1,23*10⁻⁹ | 53,0 |
| 0,30 | 834*10³ | 0,712*10⁻³ | 1,08*10⁻⁹ | 51,4 |
| 1,00 | 773*10³ | 0,541*10⁻³ | 1,23*10⁻⁹ | 73,2 |

Comme le montre le Tableau 1, avec une augmentation de la quantité de la mélamine M prise pour préparer le mélange réactif (composition 3), l'aire totale spécifique S_{QP} de la surface Q_{P} des pores P et le volume total spécifique V_{P} correspondant de ces pores P diminuent quelque peu. Il est important que le volume spécifique Ω_{X} des mésopores X dans le volume total spécifique V_{P} des pores P et le maximum β_{Ψ} de distribution de ces pores P selon la largeur Ψ_{X}, Ψ_{Y} restent pratiquement inchangés, au moins pour les rapports « mélamine M / charbon actif » mₘ/m₃₁ = 0,05; 0,10; 0,20; 0,30. Ainsi, le dopage du matériau charbonneux à l'azote s'opère, lors de la réalisation du procédé de dopage 1 selon l'invention, de manière sélective, préférentiellement sur la surface des pores P, au moins pour les rapports « mélamine M / charbon actif » mₘ/m₃₁ = 0,05; 0,10; 0,20; 0,30.

Lorsque la teneur en mélamine M et en charbon actif est de compte à demi (c'est-à-dire, lorsque mₘ/m₃₁ = 1,00) dans la composition 3, il se crée, au cours de la phase de traitement thermique 11, un excédent des fragments azotés implantés dans la superficie du charbon actif. Cela conduit à un bouchage partiel des pores P du charbon actif (par un flux extérieur des fragments azotés à l'entrée/sortie des pores P) ce qui explique la diminution de l'aire totale spécifique S_{QP} de la surface Q_{P} des pores P et du volume total spécifique V_{P} des pores P lorsque m_{M}/m₃₁ = 1,00 dans le Tableau 1.

La première conclusion que l'on peut faire à partir de cet exemple se résume en ce que les caractéristiques obtenues de la porosité du charbon actif dopé à l'aide du procédé de dopage 1 (au moins pour les rapports « mélamine M / charbon actif » mₘ/m₃₁ = 0,05; 0,10; 0,20; 0,30) permettent son utilisation comme le matériau pour les électrodes 20 destinées aux condensateurs 20 à double couche électrique.

Le charbon actif dopé obtenu selon le procédé de dopage 1 est brûlé pour déterminer sa composition en éléments. Une analyse ultérieure des éléments de la cendre permet d'obtenir les valeurs de la concentration massique (teneur) N d'azote dans une unité de masse du charbon actif dopé. Les résultats de ces mesures de la concentration massique N d'azote en fonction du rapport « mélamine M / charbon actif » m_{M}/m₃₁ sont représentés sur la figure 4 et dans le Tableau 2 ci-dessous.

**Tableau 2.**

| Rapport entre la masse m_{M} de la mélamine M et la masse m₃₁ du charbon actif dans le mélange | Concentration massique (teneur) N d'azote dans une unité |
|---|---|
| AVANT dopage, | de masse du charbon actif, |
| m_{M}/m₃₁, | |
| unités relatives | % en poids |
| ----- | **AVANT dopage** |
| 0 | 0 |
| ----- | **APRES dopage** |
| 0,05 | 1,0 |
| 0,10 | 2,0 |
| 0,20 | 4,8 |
| 0,30 | 6,2 |
| 1,00 | 12,2 |

Il résulte du Tableau 2 et de la figure 4 que la teneur massique N en azote dans le charbon actif dopé à l'aide du procédé de dopage 1 est inférieure en pourcents en poids à la valeur seuil de 8% au moins pour les rapports « mélamine M / charbon actif » m_{M}/m₃₁ = 0,05; 0,10; 0,20; 0,30.

En plus, la concentration des atomes d'azote a été mesurée sur la surface Q_{P} des pores P pour les charbons actifs obtenus avec le rapport « mélamine M / charbon actif » m_{M}/m₃₁ = 0,05; 0,10 et 0,20. Les mesures ont été réalisées à l'aide d'une technique de spectroscopie photoélectronique aux rayons X sur un appareil KRATOS-800XPS avec une résolution en énergie de 1,2 électronvolt lorsque l'on utilise le rayonnement AIKα, *hv* = 1486,6 eV. Les spectres ont été traités à l'aide du logiciel XPSPeak 4.0. Il a été détecté qu'après le traitement à l'aide de la mélamine M avec les rapports m_{M}/m₃₁ choisis, un pic avec l'énergie 398±0,5 eV apparaît dans le spectre. Selon [3], [4], ce pic peut être attribué à des états d'azote dans la structure similaire à la structure de la pyridine, c'est-à-dire, lorsque l'atome d'azote fait partie du cycle hexagonal carbonique dans le graphite. La teneur de tels atomes d'azote sur la surface Q_{P} des pores P du charbon actif reste approximativement la même pour tous les rapports sélectionnés « mélamine M / charbon actif » m_{M}/m₃₁ et fait en pourcents atomiques environ 15% ce qui est supérieure à la valeur seuil de 10%.

La deuxième conclusion que l'on peut faire à partir de cet exemple se résume en ce qu'après le dopage à l'aide du procédé de dopage 1, la teneur en azote sur la surface Q_{P} des pores P du charbon actif en pourcents atomiques (environ 15%) est supérieur à la teneur d'azote dans ce même charbon actif en pourcents en poids (1,0%; 2,0% et 4,8% respectivement) pour tous les trois rapports « mélamine M / charbon actif » m_{M}/m₃₁ = 0,05; 0,10 et 0,20. Ce fait confirme l'efficacité du procédé de dopage 1 selon l'invention.

Le deuxième exemple ci-dessous illustre les avantages de condensateur 2 à double couche électrique (figure 3) dont les électrodes 20 sont fabriquées à l'aide des charbons actifs décrits dans le premier exemple.

La fabrication proprement dite des électrodes 20 s'opère de la manière suivante.

On mélange la portion 9,3*10⁻³ kg du charbon actif avec une suspension comprenant 0,7*10⁻³ kg de polytétrafluoroéthylène (en anglais «polytetrafluoroethylene» 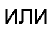 «PTFE») jusqu'à l'obtention d'une masse homogène. A partir de cette masse, on réalise une bande 34 à l'aide d'une technique connue de laminage (en anglais «rolling method»). Une fois séchée, l'épaisseur de la bande 34 obtenue fait environ 10⁻⁴ m.

Ensuite, on prend une feuille d'aluminium 201. On dépose une fine (environ 5*10⁻⁶ m) couche d'un mélange 202 de polyfluorure de vinylidène (en anglais «polyvinylidene fluoride» ou «PVDF») avec de la cendre d'acétylène sur la surface de la feuille d'aluminium 201. La feuille d'aluminium 201 traitée ainsi présente des propriétés adhésives améliorées.

On dépose la bande 34 mentionnée ci-dessus et comprenant le charbon actif sur la surface traitée de la feuille d'aluminium 201. Cette opération est également réalisée à l'aide de la technique de laminage. Un substrat multicouche ainsi obtenu est desséché. Ensuite, on découpe 82 du substrat multicouche les électrodes 20 dont les dimensions font 0,03 m x 0,05 m.

Un assemblage d'un condensateur 2 à double couche électrique s'opère de la manière suivante.

D'abord, on forme un empilement 21 comprenant une anode 211, une cathode 212 et un séparateur poreux isolant 213 disposé entre elles. Dans le deuxième exemple, l'anode 211 consiste en électrode 20 en charbon. La cathode 212 consiste également en électrode 20 en charbon.

Ensuite, on loge l'empilement 21 dans une boîte 22 comprenant des sorties de contact positive et négative 221, 222 au moins partiellement saillantes à l'extérieur de la boîte 22.

Puis, l'anode 211 et la cathode 212 sont connectées avec les sorties de contact positive et négative 221, 222 respectivement.

On imbibe l'empilement 21 par un électrolyte organique 23. Dans le deuxième exemple, on utilise, comme l'électrolyte organique 23, la solution CH₃(C₂H₅)₃NBF₄ dans l'acétonitrile (en anglais «acetonitrile») dont la concentration molaire fait 1,3 Mole.

A la fin, la boîte 22 est scellée : le condensateur à double couche électrique 2 est assemblé (figure 3).

Pour les besoins du deuxième exemple, on fabrique six jeux d'électrodes 20 (chaque jeu comprenant deux électrodes 20) à partir des charbons actifs décrits dans le premier exemple et préparés à partir de la composition 3 avec les rapports « mélamine M / charbon actif » m_{M}/m₃₁ suivants :
- pour le charbon actif de départ non dopé : m_{M}/m₃₁ = 0;
- pour le charbon actif dopé à l'aide du procédé de dopage selon l'invention : m_{M}/m₃₁ = 0,05; 0,10; 0,20; 0,30; 1,00.

Ensuite, à l'aide de ces six jeux des électrodes 20 on assemble respectivement six condensateurs 2 à double couche électrique, chacun d'eux présentant son propre rapport m_{M}/m₃₁. Il résulte du tableau 1 que, pour chaque électrode 20 (des six jeux mentionnés ci-dessus), le volume spécifique Ω_{X} des mésopores X se trouve dans l'intervalle sélectif de 20% à 80% du volume total spécifique V_{P} des pores P. Ainsi, la quantité des « entrées/sorties » λ_{XY} des micropores Y dans les mésopores X (figure 3) est suffisante pour faciliter et/ou accélérer :
- une entrée des ions de l'électrolyte organique 23 dans les micropores Y des mésopores X pour accélérer la charge de l'électrode 20,
- une sortie des ions de l'électrolyte organique 23 des micropores Y dans les mésopores X pour accélérer la décharge de l'électrode 20.

La détermination de la capacité et de la résistance de ces six condensateurs 2 à double couche électrique s'est opérée à l'aide des techniques standardisées décrites en [5].

Les résultats de mesures des différentes caractéristiques des condensateurs 2 à double couche électrique sont réunis dans le Tableau 3 récapitulatif ci-dessous.

**Tableau 3.**

| Rapport entre la masse m_{M} de la mélamine M et la masse m₃₁ du charbon actif dans le mélange | Caractéristiques du condensateur à double couche électrique | | | |
|---|---|---|---|---|
| | Capacité spécifique | Résistance spécifique | Diminution de la capacité avec augmentation du courant, | Constante de temps, |
| AVANT dopage, | C, | R, | | s |
| m_{M}/m₃₁, | F/m³ | Ohm*m² | (-dC/dl) | |
| unités relatives | | | | |
| ----- | **Electrodes en charbon actif de départ non dopé** | | | |
| 0 | 0,68*10⁷ | 4,04*10⁻⁴ | Très forte, non linéaire | 0,56 |
| ----- | **Electrodes en charbon actif dopé** | | | |
| 0,05 | 1,36*10⁷ | 1,28*10⁻⁴ | 0,08 | 0,35 |
| 0,10 | 1,22*10⁷ | 1,16*10⁻⁴ | 0,08 | 0,29 |
| 0,20 | 1,28*10⁷ | 1,26*10⁻⁴ | 0,09 | 0,32 |
| 0,30 | 1,24*10⁷ | 1,26*10⁻⁴ | 0,09 | 0,32 |
| 1,00 | 1,27*10⁷ | 2,36*10⁻⁴ | 0,34 | 0,60 |

Il résulte du tableau 3 que
- la capacité spécifique (C_{0,05} ~ C_{0,10} ~ C_{0,20} ~ C_{0,30} ~ C_{1,00} ~ 1,27*10⁷ F/m³) des condensateurs 2 à double couche électrique dont les électrodes 20 sont fabriquées en utilisant les charbons actifs dopés à l'aide du procédé de dopage 1 selon l'invention, fait grosso modo le double de la capacité spécifique (C₀ ~ 0,68*10⁷ F/m³) du condensateur étalon apparenté dont les électrodes sont fabriquées à partir du charbon actif de départ non dopé avec le rapport « mélamine M / charbon actif » m_{M}/m₃₁ = 0,
- la résistance spécifique (R_{0,05} ~ R_{0,10} ~ R_{0,20} ~ R_{0,30} ~ R_{1,00} ~ 1,46 Ohm*cm² = 1,46*10⁻⁴ Ohm*m²) des condensateurs 2 à double couche électrique dont les électrodes 20 sont fabriquées en utilisant les charbons actifs dopés à l'aide du procédé de dopage 1 selon l'invention, est grosso modo trois fois inférieure à la résistance spécifique (R₀ ~ 4,04 Ohm*cm² = 4,04*10⁻⁴ Ohm*m²) du condensateur étalon apparenté.

D'autres avantages de l'invention démontrés par le deuxième exemple, sont discutés ci-dessous en référence aux résultats de mesures représentés en forme des graphiques sur les figures 5-10.

Il résulte de la figure 5 que la capacité spécifique C et la résistance spécifique R des condensateurs 2 à double couche électrique présentent une dépendance à extremum de la teneur massique N en azote dans le charbon actif dopé à l'aide du procédé de dopage 1 :
- la résistance spécifique R présente un domaine des valeurs minimales pour la teneur massique N en azote voisinant 6%,
- la capacité spécifique C présente un domaine des valeurs maximales pour la teneur massique N en azote voisinant 8%.

La figure 6 représente les caractéristiques expérimentales du condensateur-étalon du deuxième exemple (courbe 1) dont les électrodes sont fabriquées à partir du charbon actif de départ non dopé, avec les caractéristiques expérimentales du condensateur 2 à double couche électrique du deuxième exemple (courbe 2) dont les électrodes 20 sont fabriquées à partir du charbon actif dopé à l'aide du procédé de dopage 1 selon l'invention.

La courbe 2 sur la figure 6 montre que la capacité spécifique massique Σ (c'est-à-dire, la capacité rapportée à l'unité de masse des deux électrodes) du condensateur 2 à double couche électrique dont les électrodes 20 comportent le charbon actif dopé à l'azote selon l'invention diminue de ~6% lorsque la densité ρₗ du courant de charge augmente en ~10 fois ! A titre de comparaison, la courbe 1 sur la figure 6 montre que la capacité spécifique massique Σ du condensateur-étalon dont les électrodes comportent le charbon actif non dopé, diminue de ~50% lorsque la densité ρₗ du courant de charge augmente en -5 fois. La figure 7 complète avantageusement ces observations : les capacités spécifiques massiques Σ des condensateurs à double couche électrique connus [1] diminuent de ≥ 50% lorsque la densité ρₗ du courant de charge augmente en -5 fois.

Ainsi, l'utilisation du charbon actif obtenu selon l'invention permet d'augmenter considérablement le courant de charge et, par conséquent, d'améliorer radicalement les propriétés du condensateur 2 à double couche électrique.

La comparaison des courbes 2 et 1 clairement distinctes l'une de l'autre sur la figure 6 montre que les caractéristiques du condensateur 2 à double couche électrique avec les électrodes 20 en charbon dopées à l'azote selon l'invention sont radicalement différentes des caractéristiques du condensateur-étalon avec les électrodes en charbon non dopé. Au contraire, la comparaison des courbes représentées sur le figure 7 montre que les courbes «NMC-2», «NMC-8», «NMC-13» et «NMC-0» sont proches les unes aux autres et ne permet pas de conclure sur un avantage considérable des caractéristiques du condensateur à double couche électrique avec les électrodes en charbon dopé selon [1] (courbes «NMC-2», «NMC-8», «NMC-13») versus les caractéristiques du condensateur-étalon de [1] (courbe «NMC-0»).

Ces observations permettent de faire au moins deux conclusions suivantes :
- le procédé de dopage 1 selon l'invention permet d'obtenir le matériau charbonneux qui a un degré de pureté des pores P a priori plus élevé comparé au charbon mésoporeux dopé à l'azote selon le procédé connu décrit en [1],
- l'implantation sélective des fragments azotés notamment dans la structure de la superficie du charbon actif dopé à l'aide du procédé de dopage 1 selon l'invention est plus efficace que l'implantation non sélective des groupes fonctionnels azotés dans la masse du charbon actif lors du dopage de ce dernier selon [1].

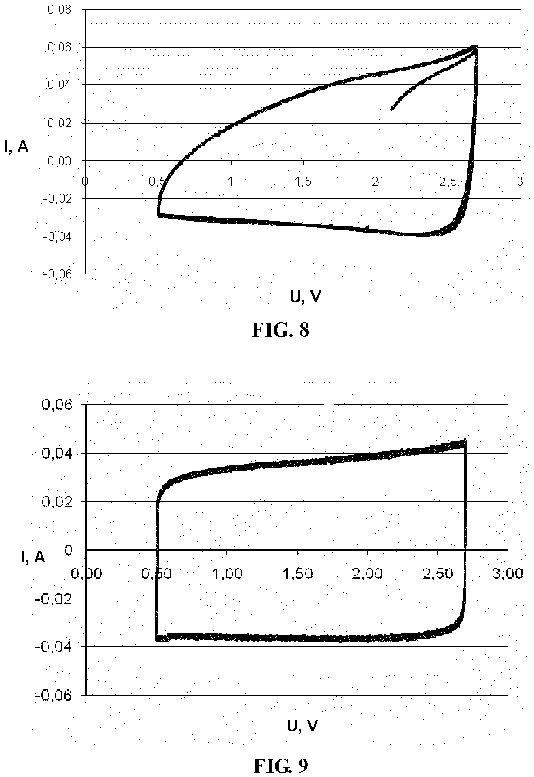

Sur les figures 8 et 9 sont représentées des courbes volt-ampères cycliques pour les échantillons des condensateurs à double couche électrique avec les électrodes :
- sur la base du charbon actif de départ (figure 8), et
- sur la base du charbon actif dopé à l'azote selon l'invention avec la teneur massique N en azote faisant 4,82% (figure 9).

La courbe volt-ampère pour le charbon actif dopé (figure 9) présente une forme proche de rectangulaire et correspond aux phénomènes propres à la formation de la double couche électrique. Il résulte de la comparaison des figures 8 et 9 que l'introduction d'azote enlève les inconvénients du charbon actif de départ et rend les charbons actifs dopés à l'azote selon l'invention aptes à l'utilisation comme le matériel d'électrode pour les condensateurs 2 à double couche électrique.

En outre, il est détecté expérimentalement que l'implantation sélective des hétéroatomes d'azote dans un système de liaisons carbone-carbone sur la surface des pores P conduit à l'augmentation de la tension U de travail du condensateur 2 à double couche électrique. Le déposant suppose que cet effet s'explique par une modification du potentiel électrochimique de l'électrode 20 et, par conséquent, de l'activité de l'électrode 20 pendant la décomposition électrocatalytique de l'électrolyte organique 23.

Les relations entre les caractéristiques (capacité spécifique C et résistance spécifique R) du condensateur 2 à double couche électrique selon l'invention et la tension U de travail, sont représentées sur la figure 10. Les données obtenues confirment la possibilité d'élargir la plage de la tension U de travail du condensateur 2 à double couche électrique selon l'invention au moins jusqu'à 3,2 V.

Ainsi est créé le procédé de dopage 1 à l'azote du charbon actif qui est plus facile et plus économe que le procédé de dopage connu en [1]. Le procédé de dopage 1 selon l'invention permet d'obtenir le charbon actif avec le dopage sélectif à l'azote surtout de la surface des pores P. L'utilisation de ce charbon actif dopé à l'azote selon l'invention pour les électrodes 20 du condensateur 2 à double couche électrique assure l'amélioration d'au moins les caractéristiques suivantes du condensateur 2 à double couche électrique :
- augmentation de la capacité spécifique volumique C,
- diminution de la résistance interne R,
- diminution de la dépendance de la capacité spécifique massique Σ de la densité ρₗ de courant de charge,
- élargissement de la plage des tensions U de travail.

En outre, comme évoqué ci-dessus, les rapports massiques optima m_{M}/m₃₁ entre la mélamine M en tant que matière azotée, et le charbon actif de départ, sont déterminés pour atteindre les avantages mentionnés. Cela est particulièrement important pour optimiser la production en masse du charbon actif dopé à l'azote selon l'invention.

### REFERENCES BIBLIOGRAPHIQUES en langue anglaise:

[1] KIM Jeongnam et al., Synthesis of Mesoporous Carbons with Controllable N-Content and Their Supercapacitor Properties, Bull. Korean Chem. Soc., 2008, Vol. 29, No. 2, p. 413-416.
[2] ISO 15901-3:2007, Pore size distribution and porosity of solid materials by mercury porosimetry and gas adsorption -- Part 3: Analysis of micropores by gas adsorption // International Organization for Standardization (www.iso.org).
[3] Seredych M., Hulicova-Jurcakova D., Lu G.Q., Bandosz T.J. Surface functional groups of carbons and the effects of their chemical character, density and accessibility to ions on electrochemical performance // Carbon, 2008, vol. 46, pp. 1475-1488.
[4] Ismagilov Z. R., Shalagina A. E., Podyacheva O. Yu., Ischenko A. V., Kibis L. S., Boronin A. I., Chesalov Yu. A., Kochubey D. I., Romanenko A. I., Anikeeva O. B., Buryakov T. I., Tkachev E. N., Structure and electrical conductivity of nitrogen-doped carbon nanofibers // Carbon, 2009, vol. 47, pp. 1922-1929.
[5] International Standard IEC 62576, Electric double-layer capacitors for use in hybrid electric vehicles - Test methods for electrical characteristics // 2009, International Electrotechnical Commission (www.iec.ch).

## Revendications

1. Procédé de dopage (1) à l'azote d'un matériau charbonneux destiné aux électrodes (20) pour un condensateur (2) à double couche électrique, le procédé de dopage (1) comprenant au moins :
- une phase de préparation (10) d'une composition (3) d'un premier matériau (31) comprenant du charbon et d'un deuxième matériau (32) comprenant de l'azote, et
- une phase de traitement thermique (11) de la composition (3) dans une atmosphère d'un gaz inerte (4) pour obtenir le matériau charbonneux dopé à l'azote,
**caractérisé en ce que** la composition (3) se présente comme un mélange sec (33) du premier et du deuxième matériaux (31), (32).

2. Procédé de dopage (1) selon la revendication 1, **caractérisé en ce que** le premier matériau (31) comprend une première poudre (310) consistant en premières particules solides (A), et **en ce que** le deuxième matériau (32) comprend une deuxième poudre (320) consistant en deuxièmes particules solides (B) distinctes des premières particules solides (A).

3. Procédé de dopage (1) selon la revendication 2, **caractérisé en ce que** chaque première particule solide (A) comprend un réseau de pores (P) communicant les uns avec les autres, **en ce que** ces pores (P) comportent au moins :
- des mésopores (X) ayant une largeur (Ψ_{X}) de 2*10⁻⁹ m à 50*10⁻⁹ m,
- des micropores (Y) ayant une largeur (Ψ_{Y}) inférieure à 2*10⁻⁹ m,
**en ce qu'**un maximum (β_{Ψ}) de distribution de ces pores (P) selon la largeur (Ψ_{X}), (Ψ_{Y}) se trouve dans un intervalle de 10⁻⁹ m à 3*10⁻⁹ m.

4. Procédé de dopage (1) selon la revendication 3, **caractérisé en ce que** les premières et les deuxièmes particules solides (A), (B) ont une taille (α) de l'ordre de 10⁻⁶ m.

5. Procédé de dopage (1) selon la revendication 4, **caractérisé en ce qu'**une aire totale spécifique (S_{QP}) de la surface (Q_{P}) des pores (P) fait au moins 10⁶ m²/kg, et **en ce qu'**un volume total spécifique (V_{P}) de ces pores (P) fait au moins 0,8*10⁻³ m³/kg.

6. Procédé de dopage (1) selon la revendication 5, **caractérisé en ce qu'**un volume spécifique (Ω_{X}) des mésopores (X) fait de 20% à 80% du volume total spécifique (V_{P}) des pores (P).

7. Procédé de dopage (1) selon l'une quelconque des revendications 2 à 6, **caractérisé en ce que** les premières particules solides (A) comportent du charbon actif.

8. Procédé de dopage (1) selon l'une quelconque des revendications 2 à 7, **caractérisé en ce que** les deuxièmes particules solides (B) comportent des dérivés de triazine (Z).

9. Procédé de dopage (1) selon la revendication 8, **caractérisé en ce que** les dérivés de triazine (Z) comporte de la mélamine (M).

10. Procédé de dopage (1) selon la revendication 9, **caractérisé en ce que** le rapport entre la masse (m_{M}) de la mélamine (M) et la masse (m₃₁) du premier matériau (31) se trouve dans l'intervalle de 0,05 à 0,5.

11. Procédé de dopage (1) selon l'une quelconque des revendications 1 à 10, **caractérisé en ce que** la phase de traitement thermique (11) comprend une première étape (111) consistant à chauffer la composition (3) jusqu'à une première température prédéterminée (T₁) comprise dans l'une au moins des plages suivantes : (a) de 720°C à 850°C; (b) de 720°C à 800°C.

12. Procédé de dopage (1) selon la revendication 11, **caractérisé en ce que** la première étape (111) de chauffe de la composition (3) jusqu'à la première température prédéterminée (T₁) se réalise à l'aide d'une montée linéaire en température, et **en ce que** la phase de traitement thermique (11) comprend en outre une deuxième étape (112) suivant la première étape (111) et consistant à maintenir, au moins soixante minutes à la première température prédéterminée (T₁), la composition (3) chauffée au cours de la première étape (111).

13. Procédé de dopage (1) selon la revendication 11, **caractérisé en ce que** la phase de traitement thermique (11) comprend :
- une troisième étape (113) consistant à chauffer, à l'aide d'une montée linéaire en température, la composition (3) jusqu'à une deuxième température prédéterminée (T₂) comprise dans une plage de 380°C à 420°C,
- une quatrième étape (114) suivant la troisième étape (113) et consistant à maintenir, au moins trente minutes à la deuxième température prédéterminée (T₂), la composition (3) chauffée au cours de la troisième étape (113),
**en ce que** la première étape (111) suit la quatrième étape (114), et
**en ce que** la phase de traitement thermique (11) comprend en outre une deuxième étape (112) suivant la première étape (111) et consistant à maintenir, au moins soixante minutes à la première température prédéterminée (T₁), la composition (3) chauffée au cours de la première étape (111).

14. Charbon actif dopé à l'azote selon le procédé de dopage (1) selon l'une quelconque des revendications 1 à 13 et destiné aux électrodes (20) pour un condensateur (2) à double couche électrique, le charbon actif comprenant un réseau de pores (P) communicant les uns avec les autres et comportant au moins des mésopores (X) ayant une largeur (Ψ_{X}) de 2*10⁻⁹ m à 50*10⁻⁹ m, **caractérisé en ce que** ces pores (P) comportent en outre au moins des micropores (Y) ayant une largeur (Ψ_{Y}) inférieure à 2*10⁻⁹ m, **en ce qu'**un maximum (β_{Ψ}) de distribution de ces pores (P) selon la largeur (Ψ_{X}), (Ψ_{Y}) se trouve dans un intervalle de 10⁻⁹ m à 3*10⁻⁹ m, **en ce que** la teneur en azote sur la surface (Q_{P}) des pores (P) est supérieure à 10% en pourcents atomiques, et **en ce que** la teneur (N) en azote dans le corps du charbon actif est inférieure à 8% en pourcents en poids.

15. Charbon actif selon la revendication 14, **caractérisé en ce que** l'azote sur la surface (Q_{P}) des pores (P) a une forme des hétéroatomes tertiaires compris dans un système de liaisons carbone-azote.
